# EUROPEAN PATENT APPLICATION

(11) **EP 4 678 501 A1**
(43) Date of publication of application: **14.01.2026**
(21) Application number: 24198208.1
(22) Date of filing: 03.09.2024
(51) Int. Cl.: B61F 5/24, F16F 1/14, B29C 41/00

(54) **A TORSION BAR SHAFT AND AN ANTI-ROLLING LIGHTWEIGHT TORSION BAR**

(30) Priority: 12.07.2024 CN 202410934000
(71) Applicant: Zhuzhou Times New Material Technology Co., Ltd., Zhuzhou, Hunan 412007 (CN)
(72) Inventor: Liu, Wensong, Zhuzhou, 412007 (CN); Tang, Teng, Zhuzhou, 412007 (CN); Zou, Minjia, Zhuzhou, 412007 (CN); Luo, Yan, Zhuzhou, 412007 (CN); Peng, Weilun, Zhuzhou, 412007 (CN); Chen, Tianou, Zhuzhou, 412007 (CN); Huo, Yanxia, Zhuzhou, 412007 (CN); Liu, Huan, Zhuzhou, 412007 (CN)
(74) Representative: Zhu, Junyi

(57) **Abstract**

A torsion bar shaft and an anti-rolling lightweight torsion bar, the torsion bar shaft comprising a metal tube and a fiber layer wrapped around the metal tube and formed by winding CF Yarns around the metal tube. Both ends of the metal tube are respectively provided with a plurality of hook teeth protruding radially outwards for hooking weft of CF Yarns to make warp bear tensile stress. The hook teeth are arranged in a manner of multiple circumferential rows and multiple axial columns, and both ends of CF Yarns are respectively hooked on the hook teeth on both ends of the metal tube after the CF Yarns are wound at an angle of -45° to 45°with the axis of the torsion bar shaft. The anti-rolling lightweight torsion bar containing the torsion bar shaft also comprises torsion arms on both ends of the torsion bar shaft, and each torsion arm is a torsion arm formed by extending and bending the metal tube of the torsion bar shaft to both ends. It also comprises end connectors, the end connectors comprise a torsion arm connecting part and a pull rod connecting part, the torsion arm connecting part is connected with the ends of the torsion arms, and the pull rod connecting part is connected with a pull rod.

## Description

### Technical Field

The present invention relates to a torsion bar shaft and an anti-rolling lightweight torsion bar, and belongs to the technical field of machining of anti-rolling torsion bars.

### Background

An anti-rolling torsion bar is a cylindrical bar which is arranged between a train body and a bogie and prevents the train body from rolling to one side by the set torsional force when the train encounters extreme crosswind and an excessive curving centrifugal force during operation. The existing anti-rolling torsion bar has a solid structure and weighs tens to one hundred kilograms, and there are tens of anti-rolling torsion bars on a train, with a total weight of several tons, coupled with wide-range and long-time operation, which consumes a lot of energy, so lightweighting of anti-rolling torsion bars is of great significance to achieve energy saving and consumption reduction for train operation.

To solve the above problem, the first thought and attempt to use in the industry is hollowing out of torsion bars.

A patent for invention with an application No. "201510724528.8" discloses a composite anti-rolling torsion bar device for rail transit vehicles, comprising a torsion bar shaft, a torsion arm, a supporting seat and a vertical connecting rod, wherein the torsion arm is fixed on the torsion bar shaft, the torsion bar shaft is fixed on a train body frame through a mounting seat, the vertical connecting rod is connected with the torsion arm through a joint, the torsion bar shaft, the vertical connecting rod and the supporting seat are made of fibrous epoxy resin composite, the torsion bar shaft and the vertical connecting rod adopt a metal mandrel or a meltable mandrel, long fibers impregnated with epoxy resin liquid are wound layer by layer on the metal mandrel or meltable mandrel by a mechanical tensioner on a winding machine, and the mold is released or melted after curing; and the supporting seat is made of fibrous epoxy resin by integral molding, and according to the size of the product structure and the needs of the mounting interface, a special molding die is designed for the molding of the supporting seat. The present invention uses fibrous epoxy resin composite instead of original metal components, so the overall weight is reduced by 40%, the technology is simple, the quality is easy to control, and lightweighting of the anti-rolling torsion bar system is realized.

In addition, a patent for invention with an application No. "202110083768.X" also discloses an anti-rolling torsion bar and a molding technology for an anti-rolling torsion bar. The anti-rolling torsion bar comprises a torsion shaft and a torsion arm, the torsion shaft comprises a core tube made of fibrous composite and a metal connector connected to both ends of the core tube, the metal connector comprises a first segment and a second segment which are connected, the first segment is connected with the core tube, the torsion arm comprises a torsion arm core made of metal, the second segment is inserted with the torsion arm, and a first fibrous composite layer is wound around the core tube and the first segment; and the torsion shaft also comprises a second fibrous composite layer, and the second fibrous composite layer is wound at least around the torsion arm core and the second segment which are in inserting connection. In this solution, the torsion arm and the torsion shaft meet the requirements of lightweighting design, and at the same time, inserting connection is adopted to retain the reliability of mechanical connection and ensure that the torsion arm and the torsion shaft are not easy to separate when being twisted.

The torsion bar shaft and the torsion shaft involved in the above two patents are the straight bar segment of the main body of the anti-rolling torsion bar, which are hereinafter referred to as the torsion bar shaft of the anti-rolling torsion bar, and the technical solutions disclosed in the two patents both use fibrous composite to make the torsion bar shaft, so as to reduce the weight of the anti-rolling torsion bar. However, the molding technologies for an anti-rolling torsion bar disclosed in the above two patents are required to mold the entire torsion bar shaft of an anti-rolling torsion bar on a specific mold, and do not use the initial supporting base which is as part of the product, which not only increases the difficulty of initial molding of the torsion bar shaft and later mold release, but also makes it difficult to control the winding direction of warp fibers in fiber cloth, so it is difficult to better meet the stress requirements of the torsion bar shaft during twisting and bending.

### Summary

The technical problem to be solved by the present invention is: how to realize lightweighting of an anti-rolling torsion bar and make the anti-rolling torsion bar, especially the torsion bar shaft, better meet the stress requirements during twisting and bending.

The basis for the lightweighting of the anti-rolling torsion bar of the present invention is hollowing out, that is, a solid metal bar is first machined into a tubular body, and then the tubular body is bent to form a hollow anti-rolling torsion bar with a tubular torsion bar shaft in the middle and tubular torsion arms on both ends.

The torsion arm made in this way is a tubular torsion arm, and the tubular torsion arm cannot be directly connected with a pull rod. Therefore, after the anti-rolling torsion bar is hollowed out, the present invention also solves the problem of how to design the part connecting the pull rod on the outer end of the torsion arm.

In order to ensure the torsional stiffness of a metal tube, the axial line of a hole drilled along the axial line of the metal tube must be highly coincident with the axial line of the metal tube, that is to say, it is necessary to ensure consistent thickness and height of the hole wall, otherwise the metal tube will be deformed or even broken at the thin wall when subjected to a large torque or bending moment.

In view of the above problem, the present invention provides the following technical solution:
A torsion bar shaft, comprising a metal tube and a fiber layer wrapped around the metal tube and formed by winding CF Yarns around the metal tube.

Both ends of the metal tube are respectively provided with a plurality of hook teeth protruding radially outwards for hooking weft of CF Yarns to make warp bear tensile stress.

The hook teeth are arranged in a manner of multiple circumferential rows and multiple axial columns, and both ends of CF Yarns are respectively hooked on the hook teeth on both ends of the metal tube after the CF Yarns are wound at an angle of -45° to 45°with the axis of the torsion bar shaft.

An anti-rolling lightweight torsion bar containing the torsion bar shaft also comprises torsion arms on both ends of the torsion bar shaft, and each torsion arm is a torsion arm formed by extending and bending the metal tube of the torsion bar shaft to both ends.

The anti-rolling lightweight torsion bar also comprises end connectors, the end connectors comprise a torsion arm connecting part and a pull rod connecting part, the torsion arm connecting part is connected with the ends of the torsion arms, and the pull rod connecting part is connected with a pull rod.

The torsion arm connecting part has a connecting hole for the ends of the torsion arms to enter.

The ends of the torsion arms are inserted into the connecting hole of the torsion arm connecting part by interference fit to realize connection between the torsion arms and the end connectors;
Or: the inner wall of the connecting hole of the torsion arm connecting part is provided with an internal thread, the periphery of the end of each tubular torsion arm is provided with an external thread, and the ends of the torsion arms are screwed into the connecting hole of the torsion arm connecting part by thread fit to realize connection between the torsion arms and the end connectors.

### Beneficial Effects:

1. The hollowing out of the metal tube in the torsion bar shaft realizes lightweighting of the torsion bar shaft, and the strength and toughness of the torsion bar shaft are ensured by wrapping the fiber layer around the metal tube;
2. The fiber layer is made by winding CF Yarns around the metal tube, which not only reduces the difficulty of initial molding of the anti-rolling fibrous torsion bar, but also facilitates later mold release;
3. The unity of force on the metal tube and the fiber layer wrapped is strengthened by planting teeth on both ends of the metal tube;
4. The arrangement of the end connectors solves the problem that the tubular torsion arms of the hollow anti-rolling torsion bar cannot be directly connected with the pull rod.

### Description of Drawings

Fig. 1 is a three-dimensional schematic diagram of the anti-rolling torsion bar;
Fig. 2 is a local sectional schematic diagram of the anti-rolling torsion bar;
Fig. 3 is a local schematic diagram of Fig. 2;
Fig. 4 is a three-dimensional schematic diagram of the tooth sleeve;
Fig. 5 is an expanded schematic diagram of the surface of the tooth planting segment, showing CF Yarns wound at 45°;
Fig. 6 is an expanded schematic diagram of the surface of the tooth planting segment, showing CF Yarns wound at -45°;
Fig. 7 is an expanded schematic diagram of the surface of the tooth planting segment, showing CF Yarns wound at 0°;
Fig. 8 is a three-dimensional schematic diagram of the tooth sleeve, showing a reinforced row;
Fig. 9 is an expanded schematic diagram of the surface of the tooth planting segment having a reinforced row, showing CF Yarns wound at 45°;
Fig. 10 is an expanded schematic diagram of the surface of the tooth planting segment having a reinforced row, showing CF Yarns wound at -45°;
Fig. 11 is an expanded schematic diagram of the surface of the tooth planting segment having a reinforced row, showing CF Yarns wound at 0°;
Fig. 12 is a three-dimensional schematic diagram of the anti-rolling torsion bar, wherein the torsion arm on one end of the anti-rolling torsion bar is separated from the end connector to facilitate picture reading;
Fig. 13 is a sectional schematic diagram of one end of the anti-rolling torsion bar;
Fig. 14 is an exploded schematic diagram of the end connector;
Fig. 15 is a three-dimensional schematic diagram of the end connector and the pull rod which are to be assembled;
Fig. 16 is a three-dimensional schematic diagram of the end connector and the pull rod which are assembled;
Fig. 17 is a sectional schematic diagram of one end of the anti-rolling torsion bar, wherein the torsion arm connecting part is the end connector of the connecting rod;
Fig. 18 is a schematic diagram of connection between the end connector and the torsion arm by riveting, wherein the periphery of the end of the torsion arm is provided with anti-drop external ripples;

In the figures: 100. anti-rolling torsion bar; 1. torsion bar shaft; 11. metal tube; 111. tube hole; 1111. axis line of tube hole; 12. fiber layer; 121. CF Yams; 1211. warp; 1212. weft; 2. torsion arm; 21. end hole; 3. tooth sleeve; 31. half sleeve I; 32. half sleeve II; 33. fastening bolt; 34. fastening segment; 35. wrapping surface; 36. tooth planting segment; 37. transition segment; 4. hook tooth; 41. first basic row; 42. second basic row; 43. reinforced row; 5. end connector; 51. torsion arm connecting part; 511. connecting hole; 512. anti-drop external ripples; 513. connecting rod; 52. pull rod connecting part; 521. outer half sleeve I; 5211. left fixed foot I; 52111. left screw hole I; 5212. right fixed foot I; 52121. right screw hole I; 522. outer half sleeve II; 5221. left fixed foot II; 52211. left screw hole II; 5222. right fixed foot II; 52221. right screw hole II; 523. front inner half sleeve; 524. rear inner half sleeve; 525. wear bushing I; 526. wear bushing II; 527. pin shaft hole; 528. joint ball; 529. screw; 6. pull rod; 61. left connecting column; 611. left screw hole; 62. right connecting column; 621. right screw hole; 8. supporting seat.

### Detailed Description

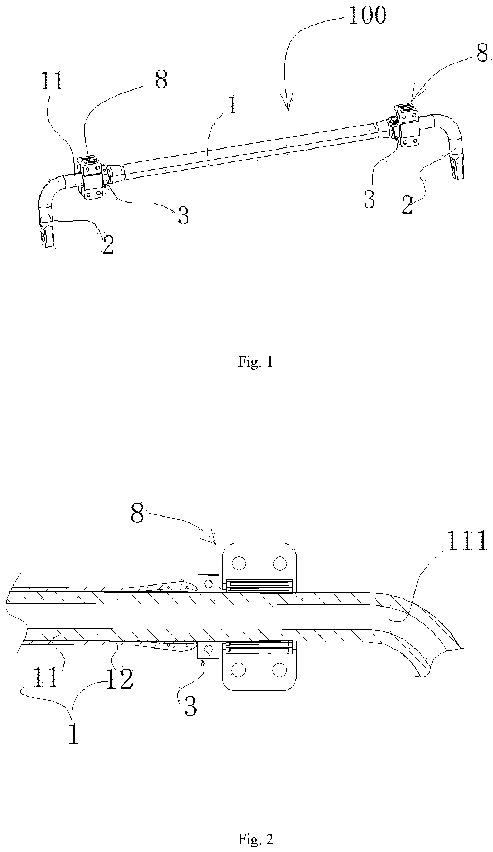

As shown in Fig. 1, an anti-rolling torsion bar is a bar which is arranged between a train body and a bogie and prevents the train body from rolling to one side by the set torsional force. The anti-rolling torsion bar is composed of a tubular torsion bar shaft 1 in the middle and torsion arms 2 on both ends, and the torsion bar shaft 1 and the torsion arms 2 form an included angle of about 90°. In application, the anti-rolling torsion bar 100 is installed on the bogie of the train in a torsional manner by means of the supporting seat 8 on both ends of the torsion bar shaft 1, and the outer ends of the torsion arms 2 on both ends are respectively connected with both sides of a carriage through a pull rod 6. When the train encounters extreme crosswind and an excessive curving centrifugal force during operation, the carriage rolls, the outer end of the torsion arm 2 on one end of the anti-rolling torsion bar 100 is subjected to a tensile force from one side of the carriage through the pull rod 6, and the outer end of the torsion arm 2 on the other end is subjected to pressure from one side of the carriage through the pull rod 6 so that both ends of the torsion bar shaft 1 are subjected to opposite torsional forces, and the torsion bar shaft 1 must resist the opposite torsional forces from both ends with the own gyroscopic force, so as to achieve the function of preventing the carriage from rolling.

The present invention will be further described below in combination with embodiments and drawings:

### Embodiment 1

As shown in Fig. 1 and Fig. 2, a torsion bar shaft 1 comprises a metal tube 11 and a fiber layer 12 wrapped around the metal tube 11 and formed by winding CF (carbon fiber) Yarns 121 around the metal tube 11. In this way, since the metal tube 11 is hollow, which can directly reduce the weight of the torsion bar shaft 1, and the density of the fibrous composite is much lower than that of metals so that the weight of the entire anti-rolling torsion bar is significantly reduced. Meanwhile, since the metal tube 11 is wrapped with the fiber layer so that the torsion bar shaft 1 has far higher structural strength than the torsion bar shaft 1 made of pure fibrous composite in the prior art and can show the strength and toughness not inferior to pure metal torsion rods. Moreover, since the metal tube 11 is used as a basic support in this solution, the CF Yarns 121 can be wound around the metal tube 11 only by fixing both ends of the metal tube 11 or the torsion arms 2 on both ends by a clamp during manufacturing until the fiber layer 12 is formed, and then the clamp is loosened, which not only reduces the difficulty of initial molding of the anti-rolling fibrous torsion bar, but also facilitates later mold release.

Preferably, the metal tube is made of high-quality steel.

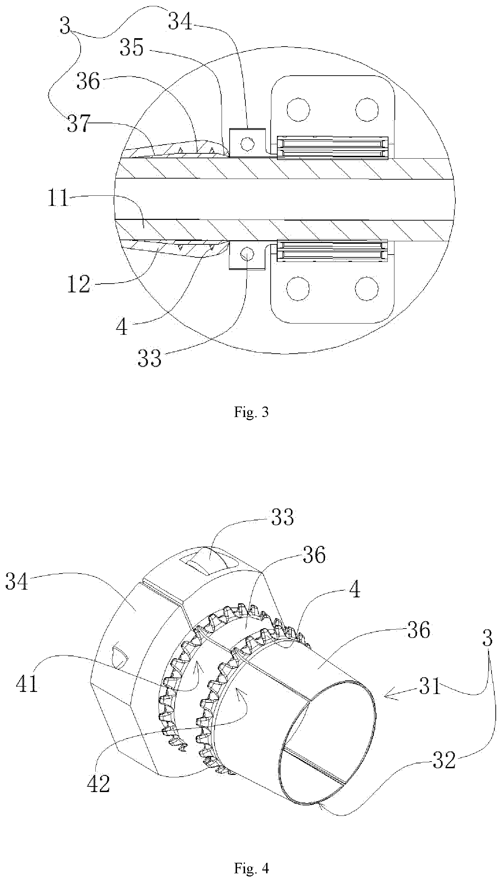

As shown in Fig. 3 and Fig. 4, further, both ends of the metal tube 11 are respectively provided with a plurality of hook teeth 4 protruding radially outwards for hooking weft 1212 of the CF Yarns 121 to make warp 1211 bear tensile stress. Since the warp 1211 and the weft 1212 of the CF Yarns 121 are interwoven and bonded as a whole, the warp 1211 can be stressed when the weft 1212 is hooked on the hook teeth 4 so that when the torsion bar shaft 1 is twisted or bent, the fiber layer 12 cannot be separated from the metal tube 11, ensuring the absolute force integrity of the torsion bar shaft 1.

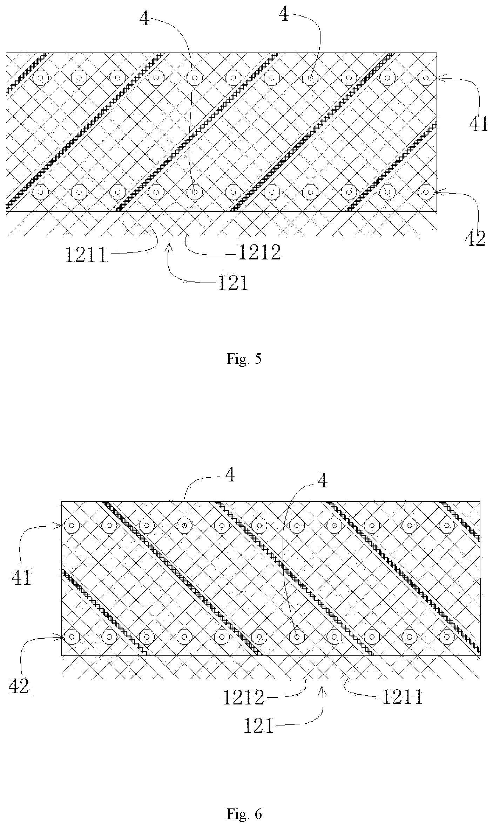

As shown in Fig. 3 to Fig. 7, the hook teeth 4 are arranged in a manner of multiple circumferential rows and multiple axial columns, and both ends of the CF Yarns 121 are respectively hooked on the hook teeth 4 on both ends of the metal tube 11 after the CF Yarns 121 are wound at an angle of -45° to 45°with the axis of the torsion bar shaft 1, for example:

After wound at 0°, both ends of the CF Yarns 121 are pasted around the metal tube 11 parallel to the axis to be hooked on the hook teeth 4, and when the torsion bar shaft 1 is bent, the CF Yarns 121 on one side opposite to the bending direction are subjected to tensile stress to improve the bending strength of the torsion bar shaft 1;

After wound at 45° or 30°, both ends are hooked on the hook teeth 4, and when the torsion bar shaft 1 is twisted in a forward direction, the CF Yarns 121 are wound at 45° or 30°, in particular, the warp 1211 of the CF Yarns 121 wound at 45° is subjected to a tensile force which is the most consistent with the torsion direction, and the warp 1211 of the CF Yarns 121 provides guarantee for torsional stiffness in the torsion direction;

After wound at -45° or -30°, both ends are hooked on the hook teeth 4, and when the torsion bar shaft 1 is twisted in a reverse direction, the CF Yarns 121 are wound at -45° or -30°, in particular, the warp 1211 of the CF Yarns 121 wound at -45° is subjected to a tensile force which is the most consistent with the torsion direction, and the warp 1211 of the CF Yarns 121 provides guarantee for torsional stiffness in the torsion direction.

The hook teeth 4 are arranged in an array of two rows and multiple columns, the two rows comprise a first basic row 41 and a second basic row 42, and the hook teeth 4 in the first basic row 41 are arranged in columns respectively corresponding to the hook teeth 4 in the second basic row 42. When the CF Yarns 121 are wound at 0°, 45° or -45°, the same warp 1211 on one end of the torsion bar shaft 1 is respectively subjected to tensile stress provided at the same time by two hook teeth 4 located in the first basic row 41 and the second basic row 42. It is determined that the same warp 1211 is subjected to tensile stress shared by two hook teeth 4 at the same time to avoid tear so that the CF Yarns 121 can be fixed on the ends.

In addition to the above winding methods, the present application also relates to winding at 90° with the axis of the torsion bar shaft 1, i.e., circumferential winding is performed around the CF Yarns 121 wound at the above angles to realize circumferential positioning and tightening of the CF Yarns 121 wound at the above angles, so as to strengthen the integrity of the entire fiber layer 12 and the metal tube 11.

Further, the hook teeth 4 are arranged on the outer peripheral surface of a tooth sleeve 3 on the metal tube 11, and the tooth sleeve 3 is fixedly sheathed with the metal tube. Each tooth sleeve 3 has a two-half bolt fastening structure and is composed of a half sleeve I 31, a half sleeve II 32 and a fastening bolt 33, one segment of the half sleeve 131 and the half sleeve II 32 near the supporting seat 8 is a fastening segment 34 for closing and tightening, and the other segment is a tooth planting segment 36 for arranging the hook teeth 4. Such arrangement does not need to plant teeth on the metal tube 11, thus reducing the difficulty of manufacturing the metal tube 11.

Further, the periphery of one end of the tooth planting segment 36 of the tooth sleeve near the fastening segment 34 is also provided with a wrapping surface 35 that retracts in a curved surface to prevent the fiber layer 12 from retracting to the middle part of the torsion bar shaft 1 under stress so that both ends of the fiber layer 12 cannot retract to the middle part, and the periphery of the other end is provided with a transition segment 37 tapered to the middle part of the torsion bar shaft 1.

### Embodiment 2

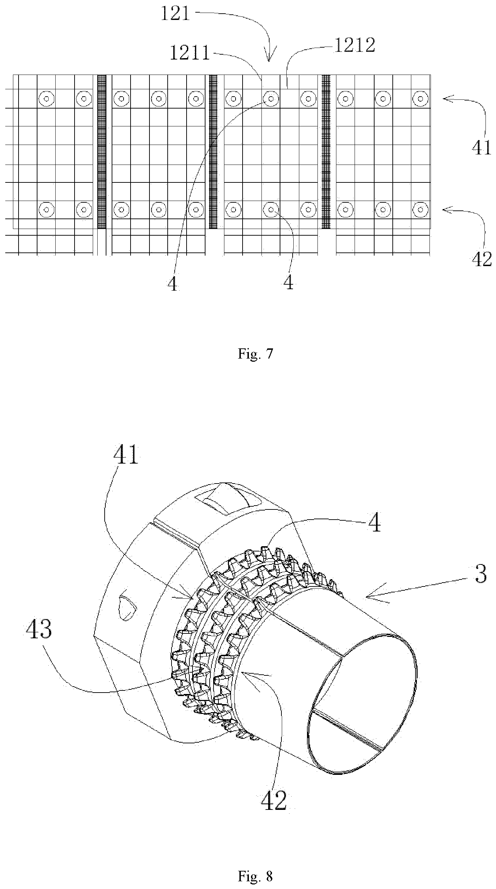

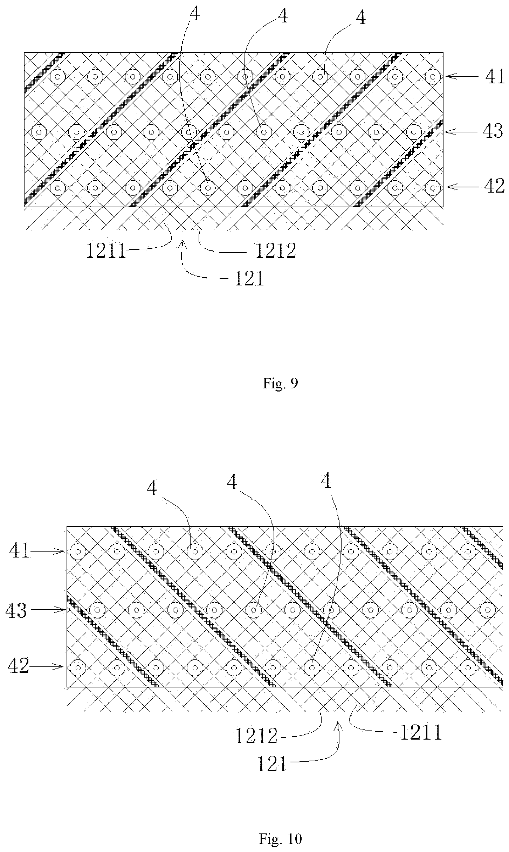

As shown in Fig. 8 to Fig. 11, the difference from embodiment 1 is that: a reinforced row 43 is added between the first basic row 41 and the second basic row 42 so that the CF Yarns 121 wound at 45° or -45° have the same warp 1211 on one end of the torsion bar shaft 1 respectively subjected to tensile stress provided at the same time by three hook teeth 4 located in the first basic row 41, the reinforced row 43 and the second basic row 42. In this way, the same warp 302 can be subjected to tensile stress shared by the three hook teeth 4 at the same time to fix the CF Yarns 121 on the ends more firmly.

### Embodiment 3

As shown in Fig. 3 to Fig 11, a stiffness guarantee method for a torsion bar shaft of an anti-rolling torsion bar device is that CF Yarns 121 are wound around the metal tube 11 at positive and negative angles to the axis of the torsion bar shaft 1 according to the forward and reverse torsion directions of the anti-rolling torsion bar 100, the CF Yarns 121 are axially pasted at intervals at an angle of 0° with the axis of the torsion bar shaft 1, and both ends of all the CF Yarns 121 are respectively hooked on the hook teeth 4 to form a fiber layer 12 with tensile stress mainly provided by the warp 1211 in the CF Yarns 121 to enhance torsional stiffness and flexural stiffness.

Specifically, a winding method for the CF Yarns 121 is as follows: according to the performance requirements of the anti-rolling torsion bar 100, the CF Yarns 121 are wound around the metal tube 11 at different angles to the axis of the torsion bar shaft 1, the CF Yarns 121 are wound at one angle each time to form the fiber layer 12, and the CF Yarns 121 are impregnated with glue before winding.

Preferably, the fiber layer 12 comprises a 45° winding layer, a -45° winding layer, a 0° winding layer and a 90° winding layer formed by unidirectionally winding the CF Yarns 121. The 45° winding layer and the -45° winding layer enhance the shear strength and stiffness of the torsion bar shaft 1, the 0° winding layer enhances the tensile strength and stiffness of the torsion bar shaft 1, and the 90° winding layer enhances the compressive strength and stiffness of the torsion bar shaft 1.

### Embodiment 4

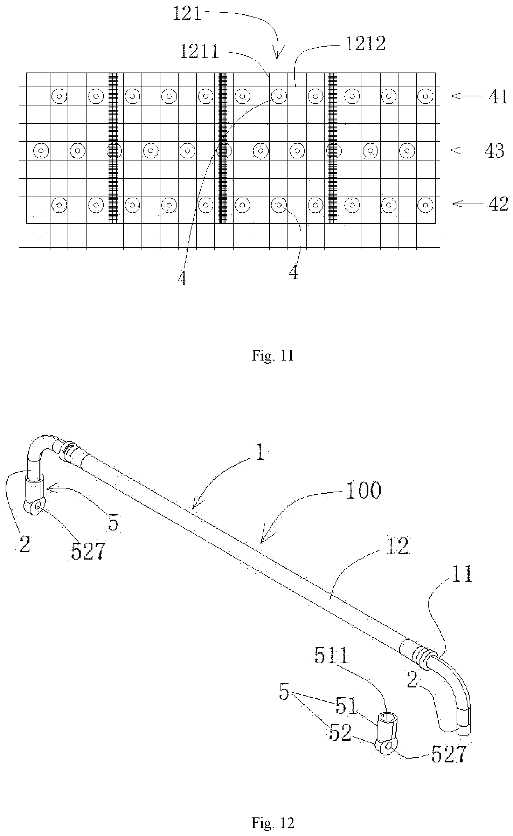

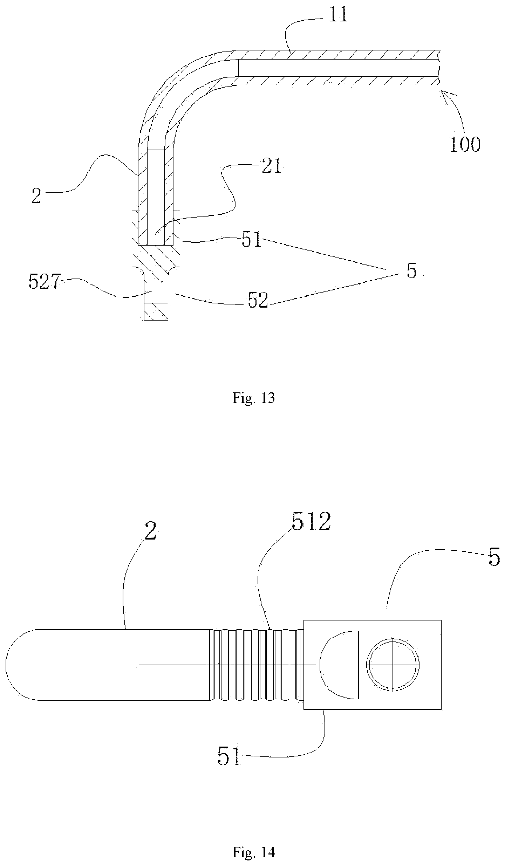

As shown in Fig. 12 and Fig. 13, an anti-rolling lightweight torsion bar containing the torsion bar shaft also comprises torsion arms on both ends of the torsion bar shaft 1, and each torsion arm is a tubular torsion arm 2 formed by extending and bending the metal tube 11 of the torsion bar shaft 1 to both ends. In other words, the anti-rolling lightweight torsion bar is a hollow bar, and the torsion bar shaft 1 is wrapped with fibers, thus showing light weight, but the torsion bar shaft 1 as a torsion part has sufficient structural strength and torsional stiffness meeting the design requirements. The torsion arms 2 are short and have strong bending resistance, and thus do not need to be wrapped with fibers.

The anti-rolling lightweight torsion bar also comprises end connectors 5 of the torsion arms 2, the end connectors 5 comprise a torsion arm connecting part 51 and a pull rod connecting part 52, the torsion arm connecting part 51 is connected with the ends of the torsion arms 2, and the pull rod connecting part 52 is connected with a pull rod 6. In this way, the arrangement of the end connectors 5 of the tubular torsion arms solves the problem that the torsion arms 2 of the hollow anti-rolling torsion bar 100 cannot be directly connected with the pull rod 6.

The torsion arm connecting part 51 has a connecting hole 511 for the ends of the torsion arms 2 to enter. In a connected state, the ends of the torsion arms 2 are located in the connecting hole 511.

The ends of the torsion arms 2 can be located in the connecting hole 511 by the following three methods:
Method I: the ends of the torsion arms 2 are inserted into the connecting hole 511 of the torsion arm connecting part 51 by interference fit to realize connection between the torsion arms 2 and the end connectors 5;
Method II: the inner wall of the connecting hole 511 of the torsion arm connecting part 51 is provided with an internal thread, the periphery of the end of each tubular torsion arm is provided with an external thread, and the ends of the torsion arms 2 are screwed into the connecting hole 511 of the torsion arm connecting part 51 by thread fit to realize connection between the torsion arms 2 and the end connectors 5.
Method III: as shown in Fig. 14, the periphery of the end of each torsion arm 2 is provided with anti-drop external ripples 512, the inner wall of the connecting hole 511 of the torsion arm connecting part 51 is provided with anti-drop internal ripples (not shown in the figure) formed for adapting to the deformation of the anti-drop external ripples 512 in hot riveting, and the torsion arms 2 are connected with the connecting hole 511 of the torsion arm connection part 51 by hot riveting.

The hot riveting here is as follows: the torsion arm connection part 51 is softened by heating, the ends of the torsion arms 2 with the anti-drop external ripples 512 are inserted into the connecting hole 511 of the torsion arm connecting part 51, and a radially centripetal compressive force is applied to the periphery of the torsion arm connecting part 51 by a cover die so that the inner wall of the connecting hole 511 can adapt to the corresponding deformation of the anti-drop external ripples 512 on the periphery of the torsion arm 2 to form the anti-drop internal ripples engaged with the anti-drop external ripples 512, thus realizing connection between the end connectors 5 and the torsion arms 2 after cooling.

The pull rod connecting part 52 is a caky body with the axis line parallel to the axis line of the torsion bar shaft 1, and the caky body is provided with a pin shaft hole 527 with the axis line parallel to the axis line of the torsion bar shaft 1 for connecting with the pull rod 6.

### Embodiment 5

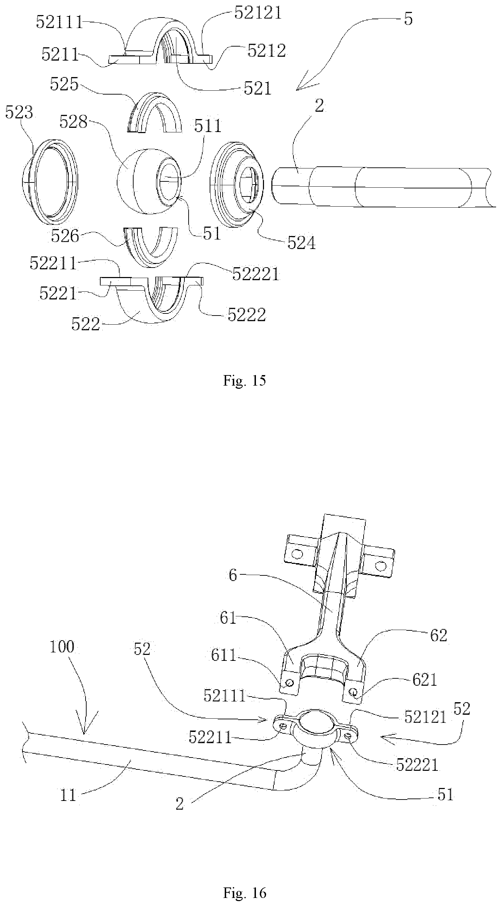

As shown in Fig. 15 to Fig. 17, the difference from embodiment 4 is that: the pull rod connecting part 52 is a spherical joint, the spherical joint comprises a joint ball 528 and an annular joint sleeve wrapped around the joint ball 528, both sides of the joint ball 528 are exposed on both sides of the joint sleeve, the connecting hole 511 is arranged in the joint ball 528 exposed on one side of the annular joint sleeve, and the joint sleeve is connected with the pull rod 6. The difference from the pull rod connecting part 52 in embodiment 4 is that: the pull rod 6 can be rotated in multiple directions through the joint sleeve and the joint ball 528, which is more suitable for the stress condition between the pull rod 6 and the torsion arms 2. In the present embodiment, the pull rod connecting part 52 is only the area where the connecting hole 511 in the joint ball 528 is located.

For the convenience of assembly, the joint sleeve is designed in two halves, specifically: the joint sleeve comprises a semi-annular outer half sleeve I 521, a semi-annular outer half sleeve II 522, an annular front inner half sleeve 523 and an annular rear inner half sleeve 524, the left and right sides of the outer half sleeve I 521 are respectively provided with a left fixed foot I 5211 and a right fixed foot I extending radially outwards, the left fixed foot I 5211 and the right fixed foot I are respectively provided with a left screw hole I 52111 and a right screw hole I 52121, the left and right sides of the outer half sleeve II 522 are respectively provided with a left fixed foot II 5221 and a right fixed foot II extending radially outwards, the left fixed foot II 5221 and the right fixed foot II are respectively provided with a left screw hole II 52211 and a right screw hole II 52221, the front inner half sleeve 523 and the rear inner half sleeve 524 are respectively fastened to the front part and the rear part of the middle area of the joint ball 528, the outer half sleeve I 521 and the outer half sleeve II 522 are fastened outside the front inner half sleeve 523 and the rear inner half sleeve 524, the left fixed foot I 5211 and the left fixed foot II 5221 are fitted, the left screw hole I 52111 and the left screw hole II 52211 are communicated for a screw 529 to pass through to be fastened, the right fixed foot I 5212 and the right fixed foot II 5222 are fitted, and the right screw hole I 52121 and the right screw hole II 52221 are communicated for a screw 529 to pass through to be fastened.

Correspondingly, one end of the pull rod 6 is provided with a left connecting column 61 and a right connecting column 62 which are integrally formed with the pull rod 6 and arranged in a pincer shape, the bottom end surfaces of the left connecting column 61 and the right connecting column 62 are axially provided with a left screw hole 611 and a right screw hole 621, and the left screw hole 611 and the right screw hole 621 can respectively correspond to the left screw hole I 52111 and the right screw hole I 52121. In this way, during assembly, only two screws 529 are needed in total to realize the assembly of the spherical joint while also directly connecting the end connectors 5 with the pull rod 6. If two screws 529 are used to separately fix the outer half sleeve I 521 and the outer half sleeve II 522 to complete the assembly of the spherical joint, and then a connecting piece is arranged to connect the spherical joint with the pull rod 6, more components and more complex structural arrangement will be needed, which is contrary to the design concept of simplicity, reasonableness and efficiency.

Further, a semi-annular wear bushing I 525 and a semi-annular wear bushing II 526 are arranged between the joint sleeve and the joint ball 528 to improve the durability and flexibility of the spherical joint.

### Embodiment 6

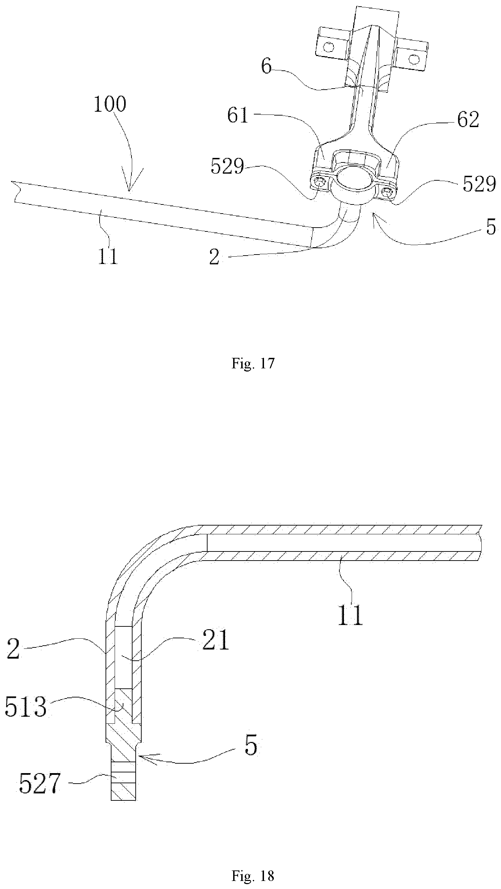

As shown in Fig. 18, the difference from embodiment 4 is that: the torsion arm connecting part 51 is a connecting rod 513 that can be inserted into the end holes 21 of the torsion arms 2, and the connecting rod 513 is inserted into the end holes 21 of the torsion arms 2 by interference fit to realize connection between the torsion arms 2 and the end connectors 5.

Of course, the connecting rod 513 and the end holes 21 of the torsion arms 2 can also be connected by the hot riveting in embodiment 1.

The above embodiments are only used for describing the present invention more clearly, and shall not be deemed to limit the protection scope covered by the present invention. Any equivalent modification shall be deemed to fall within the protection scope covered by the present invention.

## Claims

1. A torsion bar shaft, **characterized in that**: comprising a metal tube (11) and a fiber layer (12) wrapped around the metal tube (11) and formed by winding CF Yarns (121) around the metal tube (11); and both ends of the metal tube (11) are respectively provided with a plurality of hook teeth (4) protruding radially outwards; the CF Yarns (121) are wound as follows: according to the performance requirements of the anti-rolling torsion bar (100), the CF Yarns (121) are wound around the metal tube (11) at different angles to the axis of the torsion bar shaft (1), the CFYams (121) are wound at one angle each time to form a fiber layer (12); besides, the CF Yarns (121) are impregnated with glue before winding.

2. The torsion bar shaft according to claim 1, **characterized in that**: the fiber layer (12) comprises a 45° winding layer, a -45° winding layer, a 0° winding layer and a 90° winding layer formed by unidirectionally winding the CF Yarns (121).

3. The torsion bar shaft according to claim 2, **characterized in that**: the hook teeth (4) are arranged in a manner of multiple circumferential rows and multiple axial columns; the rows comprise a first basic row (41) and a second basic row (42), and the hook teeth (4) in the first basic row (41) are arranged in columns respectively corresponding to the hook teeth (4) in the second basic row (42); when the CF Yarns (121) are wound at 0°, 45° or -45°, the same warp (1211) on one end of the torsion bar shaft (1) is respectively subjected to tensile stress provided at the same time by two hook teeth (4) located in the first basic row (41) and the second basic row (42).

4. The torsion bar shaft according to claim 3, **characterized in that**: a reinforced row (43) is added between the first basic row (41) and the second basic row (42) so that the CF Yarns (121) wound at 45° or -45° have the same warp (1211) on one end of the torsion bar shaft (1) respectively subjected to tensile stress provided at the same time by three hook teeth (4) located in the first basic row (41), the reinforced row (43) and the second basic row (42).

5. The torsion bar shaft according to claim 3 or claim 4, **characterized in that**: the hook teeth (4) are arranged on the outer peripheral surface of a tooth sleeve (3) on the metal tube (11), and the tooth sleeve (3) is fixedly sheathed with the metal tube; each tooth sleeve (3) has a two-half bolt fastening structure and is composed of a half sleeve I (31), a half sleeve II (32) and a fastening bolt (33), one segment of the half sleeve I (31) and the half sleeve II (32) near the supporting seat (8) is a fastening segment (34) for closing and tightening, and the other segment is a tooth planting segment (36) for arranging the hook teeth (4).

6. The torsion bar shaft according to claim 5, **characterized in that**: the periphery of one end of the tooth planting segment (36) of the tooth sleeve (3) near the fastening segment (34) is also provided with a wrapping surface (35) that retracts in a curved surface to prevent the fiber layer (12) from retracting to the middle part of the torsion bar shaft (1) under stress so that both ends of the fiber layer (12) cannot retract to the middle part, and the periphery of the other end is provided with a transition segment (37) tapered to the middle part of the torsion bar shaft (1).

7. An anti-rolling lightweight torsion bar containing the torsion bar shaft of any one of claim 1 to claim 4, **Characterized in that**: it also comprises torsion arms (2) on both ends of the torsion bar shaft (1), and each torsion arm (2) is formed by extending and bending the metal tube (11) of the torsion bar shaft (1) to both ends; it also comprises end connectors (5) of the torsion arm (2), the end connectors (5) comprise a torsion arm connecting part (51) and a pull rod connecting part (52), the torsion arm connecting part (51) is connected with the ends of the torsion arms (2), and the pull rod (6) connecting part is connected with a pull rod (6).

8. The anti-rolling lightweight torsion bar according to claim 7, **characterized in that**: the torsion arm connecting part (51) has a connecting hole (511) for the ends of the torsion arms (2) to enter.

9. The anti-rolling lightweight torsion bar according to claim 8, **characterized in that**: the ends of the torsion arms (2) are inserted into the connecting hole (511) of the torsion arm connecting part (51) by interference fit to realize connection between the torsion arms (2) and the end connectors (5);

10. The anti-rolling lightweight torsion bar according to claim 8, **characterized in that**: the inner wall of the connecting hole (511) of the torsion arm connecting part (51) is provided with an internal thread, the periphery of the end of each tubular torsion arm is provided with an external thread, and the ends of the torsion arms (2) are screwed into the connecting hole (511) of the torsion arm connecting part (51) by thread fit to realize connection between the torsion arms (2) and the end connectors (5).

11. The anti-rolling lightweight torsion bar according to claim 8, **characterized in that**: the periphery of the end of each torsion arm (2) is provided with anti-drop external ripples (512), the inner wall of the connecting hole (511) of the torsion arm connecting part (51) is provided with anti-drop internal ripples formed for adapting to the deformation of the anti-drop external ripples (512) in hot riveting, and the torsion arms (2) are connected with the connecting hole (511) of the torsion arm connection part (51) by hot riveting.

12. The anti-rolling lightweight torsion bar according to claim 7, **characterized in that**: the torsion arm connecting part (51) is a connecting rod (513) that can be inserted into the end holes (21) of the torsion arms (2), and the connecting rod (513) is inserted into the end holes (21) of the torsion arms (2) by interference fit to realize connection between the torsion arms (2) and the end connectors (5).

13. The anti-rolling lightweight torsion bar according to any one of claim 8 to claim 12, **characterized in that**: the pull rod connecting part (52) is a caky body with the axis line parallel to the axis line of the torsion bar shaft (1), and the caky body is provided with a pin shaft hole (527) with the axis line parallel to the axis line of the torsion bar shaft (1) for connecting with the pull rod (6).

14. The anti-rolling lightweight torsion bar according to claim 8 or 9, **characterized in that**: the pull rod connecting part (52) is a spherical joint, the spherical joint comprises a joint ball (528) and an annular joint sleeve wrapped around the joint ball (528), both sides of the joint ball (528) are exposed on both sides of the joint sleeve, the connecting hole (511) is arranged in the joint ball (528) exposed on one side of the annular joint sleeve, and the joint sleeve is connected with the pull rod (6).

15. The anti-rolling lightweight torsion bar according to claim 14, **characterized in that**: the joint sleeve comprises a semi-annular outer half sleeve I (521), a semi-annular outer half sleeve II (522), an annular front inner half sleeve (523) and an annular rear inner half sleeve (524), the left and right sides of the outer half sleeve I (521) are respectively provided with a left fixed foot I (5211) and a right fixed foot I extending radially outwards, the left fixed foot I (5211) and the right fixed foot I are respectively provided with a left screw hole I (52111) and a right screw hole I (52121), the left and right sides of the outer half sleeve II (522) are respectively provided with a left fixed foot II (5221) and a right fixed foot II extending radially outwards, the left fixed foot II (5221) and the right fixed foot II are respectively provided with a left screw hole II (52211) and a right screw hole II (52221), the front inner half sleeve (523) and the rear inner half sleeve (524) are respectively fastened to the front part and the rear part of the middle area of the joint ball (528), the outer half sleeve I (521) and the outer half sleeve II (522) are fastened outside the front inner half sleeve (523) and the rear inner half sleeve (524), the left fixed foot I (5211) and the left fixed foot II (5221) are fitted, the left screw hole I (52111) and the left screw hole II (52211) are communicated for a screw (529) to pass through to be fastened, the right fixed foot I (5212) and the right fixed foot II (5222) are fitted, and the right screw hole I (52121) and the right screw hole II (52221) are communicated for a screw (529) to pass through to be fastened; a semi-annular wear bushing I (525) and a semi-annular wear bushing II (526) are arranged between the joint sleeve and the joint ball (528).
